# EUROPEAN PATENT SPECIFICATION

(11) **EP 4 670 672 B1**
(45) Date of publication and mention of the grant of the patent: **07.10.2026**
(21) Application number: 24791270.2
(22) Date of filing: 04.07.2024
(51) Int. Cl.: A61C 17/36, A61C 17/028, A61C 17/02, A61C 17/22

(54) **ORAL CAVITY CLEANING DEVICE AND CONTROL METHOD**
MUNDREINIGUNGSVORRICHTUNG UND STEUERUNGSVERFAHREN
DISPOSITIF DE NETTOYAGE DE CAVITÉ BUCCALE ET PROCÉDÉ DE COMMANDE

(30) Priority: 13.05.2024 CN 202410592201; 28.06.2024 CN 202410865564
(43) Date of publication of application: 31.12.2025
(73) Proprietor: Shenzhen Soocas Technology Co., Ltd., Shenzhen, Guangdong 518000 (CN)
(72) Inventor: ZHAO, Jinhong, Shenzhen, Guangdong 518000 (CN); YIN, Zhikun, Shenzhen, Guangdong 518000 (CN); MENG, Fandi, Shenzhen, Guangdong 518000 (CN)
(74) Representative: Santarelli
(86) International application number: PCT/CN2024/103635
(87) International publication number: WO 2025/236377

(56) References cited:
- WO-A1-2020/016545
- WO-A2-2016/201063
- CN-A- 108 042 233
- CN-A- 113 476 166
- CN-A- 115 721 434
- CN-A- 116 763 478
- CN-U- 215 273 505
- DE-A1- 3 143 196
- US-A1- 2016 331 113

## Description

### TECHNICAL FIELD

The present disclosure relates to the field of oral cleaning device technology, and more particularly, to an oral cleaning device, a control method, an electronic device and a storage medium.

### BACKGROUND

At present, rinsing and brushing integrated oral cleaning devices integrate functions of tooth cleaning and tooth gaps rinsing.

In related technologies, a rinsing and brushing integrated oral cleaning device generally includes a plurality of drive parts. During operation of the oral cleaning device, one of the drive parts drives a toothbrush head to vibrate or swing to realize the function of tooth cleaning. Another drive part drives a cleaning fluid such as water to spray out of a nozzle to achieve the function of the tooth gaps rinsing.

However, during the operation of the oral cleaning device, the plurality of drive parts may operate synchronously. When the plurality of drive parts operate synchronously, the vibration or swing of the toothbrush head may interfere with the water spraying out of the nozzle, which may adversely affect rinsing effects. Thus, cleaning effects of the oral cleaning device are adversely affected.

WO2016201063 discloses an electric toothbrush which uses light reflection to accurately detect and measure plaque, automatically clean teeth and dispensing fluid based on plaque levels across various oscillation modes.

### SUMMARY

The invention is as defined in the appended claims.

Embodiments of the present disclosure provide an oral cleaning device, a control method, an electronic device and a storage medium, which can enhance a shock force during the operation of the oral cleaning device, to improve rinsing effects at a rinsed target, thus improving cleaning effects of the oral cleaning device.

In a first aspect, the embodiments of the present disclosure provide an oral cleaning device, which includes:
a cleaning accessory comprising a motion cleaning element and a fluid cleaning element;
a holding body connected to the cleaning accessory, the holding body comprising:
an actuator configured to drive the motion cleaning element to perform a displacement motion;
a pump mechanism communicated with the fluid cleaning element, the pump mechanism being configured to convey a fluid medium to the fluid cleaning element through a communicating path to perform fluid shock; and
a control component configured to control operation of the actuator and the pump mechanism to enable the cleaning accessory to perform a periodic cleaning motion.

During the cleaning motion, the control component keeps one of the actuator and the pump mechanism operating and shuts off the other one.

In a second aspect, the embodiments of the present disclosure provide a control method for an oral cleaning device, and the control method is applied to the oral cleaning device as described in the first aspect. The control method includes:
controlling the actuator and the pump mechanism to operate, such that the cleaning accessory performs a periodic cleaning motion; and
keeping one of the actuator and the pump mechanism operating and shutting off the other one during the cleaning motion.

In a third aspect, the embodiments of the present disclosure provide an electronic device, which includes a processor and a memory storing program instructions, where the program instructions are executable by the processor, whereby the processor is configured to perform the control method for the oral cleaning device as described in the second aspect.

In a fourth aspect, the embodiments of the present disclosure provide a storage medium storing program instructions, where the program instructions are executable, whereby the control method for the oral cleaning device as described in the second aspect is performed.

The oral cleaning device, the control method, the electronic device and the storage media provided in the embodiments of the present disclosure can achieve following technical effects.

During the operation of the oral cleaning device, the actuator and the pump mechanism are controlled by the control component to alternately operate, so the actuator suspends operation when the pump mechanism is operating. In this way, during the operation of the pump mechanism, that is, in a process when tooth gaps are rinsed by means of fluid shock effects of the fluid medium conveyed by the pump mechanism to the fluid cleaning element through the communicating path, the motion cleaning element cannot be driven to perform the displacement motion because the actuator suspends operation. Therefore, adverse impacts of the motion cleaning element on the fluid shock effects of the fluid medium are reduced, energy loss during fluid delivery and/or jet impingement is reduced, and intermittent fluid shock forms shock waves, which can improve the fluid shock force, effectively remove impurities from the shock target, such that the fluid medium can accurately impact into the teeth, to improve the rinsing effects. Furthermore, the fluid medium can accurately impact a target position, avoiding a consequence that the shock force is reduced due to deviation from the shock target caused by adverse impact of the displacement motion, thereby improving the cleaning effects of the oral cleaning device.

Both the foregoing general description and the following detailed description are exemplary and explanatory only and are not intended to limit the present disclosure.

### BRIEF DESCRIPTION OF THE DRAWINGS

FIG. 1 is a schematic diagram of an oral cleaning device according to an embodiment of the present disclosure;
FIG. 2 is a schematic diagram of a control method for an oral cleaning device according to an embodiment of the present disclosure;
FIG. 3 is a schematic diagram of another control method for an oral cleaning device according to an embodiment of the present disclosure; and
FIG. 4 is a schematic diagram of an electronic device according to an embodiment of the present disclosure.

Reference numerals in the attached drawings:
cleaning accessory 11; holding body 12; control component 13; energy source 14; liquid storage cavity 15;
motion cleaning element 111; fluid cleaning element 112; contact part 113; rinsing part 114; supporting part 115; communicating pipe 116;
actuator 121; pump mechanism 122; and communicating path 124.

### DETAILED DESCRIPTION

To gain a more detailed understanding of the characteristics and technical contents of the embodiments of the present disclosure, a detailed description is made below to implementation of the embodiments of the present disclosure with reference to the accompanying drawings, which serve for reference only and are not intended to limit the embodiments of the present disclosure. In the following technical description, for convenience of explanation, multiple details are provided to provide a comprehensive understanding of the embodiments disclosed. However, one or more embodiments can still be implemented without these details. In other cases, to simplify the drawings, familiar structures and apparatuses can be simplified for display.

In the specification, the claims and the foregoing accompanying drawings of the embodiments of the present disclosure, a term such as "first" or "second" is intended to separate between similar objects but is not intended to describe a specific sequence or precedence order. It is to be understood that data used like this may be interchangeable where appropriate, such that the embodiments of the present disclosure described herein may be implemented. Furthermore, the terms "comprise" and "have" as well as variants thereof are intended to cover non-exclusive inclusion.

Unless otherwise stated, the term "a plurality of" refers to two or more.

In the embodiments of the present disclosure, the character "/" indicates that an "or" relationship is between association objects. For example, A/B represents A or B.

The term "and/or" used for describing an association relationship between the association objects represents presence of three relationships. For example, A and/or B may represent presence of A only, presence of B only, and presence of both A and B.

The term "correspondence" may refer to an association relationship or a binding relationship, and that A corresponds to B refers to an association relationship or a binding relationship between A and B.

In related technologies, a rinsing and brushing integrated oral cleaning device generally includes a plurality of drive parts. During operation of the oral cleaning device, one of the drive parts drives a toothbrush head to vibrate or swing, such that tooth surfaces may be cleaned by brush bristles on the toothbrush head, to realize the function of tooth cleaning. Another drive part drives a cleaning fluid such as water to flow to a nozzle arranged among the brush bristles of the toothbrush head, such that the nozzle sprays the water to tooth gaps, to achieve the function of tooth gaps rinsing.

However, during the operation of the oral cleaning device, the plurality of drive parts may operate synchronously. When the plurality of drive parts are in operation simultaneously, the action of vibration or swing of the toothbrush head and the action of spraying water by the nozzle are executed simultaneously. In this way, when the toothbrush head vibrates or swings such that the brush bristles on the toothbrush head clean the tooth surfaces, loss of water shock energy may be caused, which reduces the shock force, making it difficult to remove impurities from impacted surfaces, and thus cleaning effects are poor. Furthermore, the brush bristles are easy to block or interfere with the nozzle among the brush bristles from spraying water, making it easy for the nozzle to spray the water to the tooth surfaces instead of cleaning a shock target such as the tooth gaps, which causes waste of the water. After the nozzle sprays the water to the tooth surfaces, it is difficult to clean the tooth gaps, such that food residue remained in the tooth gaps results in bacteria breeding in the tooth gaps, which adversely affects rinsing effects of the tooth gaps. Thus, cleaning effects of the oral cleaning device are adversely affected.

In addition, when the oral cleaning device in the related technologies is in operation, the drive parts may keep operating for a long time, such that the nozzle may keep spraying the water, and a large amount of water is sprayed to a non-shock target, which leads to lower utilization rate of the water and higher power consumption.

In view of this, the embodiments of the present disclosure provide an oral cleaning device, a control method, an electronic device and a storage medium to realize oral rinsing by controlling alternate execution of the tooth cleaning process and the tooth gaps rinsing process during the operation of the oral cleaning device. In one aspect, less water may be sprayed to the tooth surfaces to improve the rinsing effects of the tooth gaps, thus improving the cleaning effects of the oral cleaning device. In another aspect, the tooth gaps rinsing process is performed intermittently to improve the utilization rate of the water.

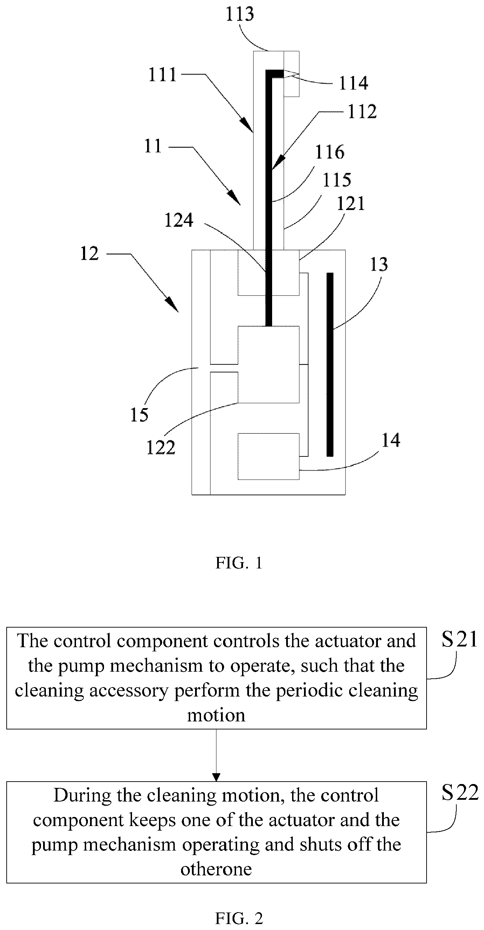

The embodiments of the present disclosure provide an oral cleaning device to provide care or cleaning of the oral cavity or teeth. Specifically, the oral cleaning device may be an electric cleaning device with a tooth rinsing function, such as a rinsing and brushing integrated electric toothbrush. With reference to FIG. 1, the oral cleaning device includes a cleaning accessory 11, a holding body 12, a control component 13, an energy source 14, and a liquid storage cavity 15.

A connection mode between the cleaning accessory 11 and the holding body 12 is a detachable connection or fixed connection. During the use of the oral cleaning device, a user grips the holding body 12, puts the cleaning accessory 11 connected to the holding body 12 into the oral cavity, and uses the cleaning accessory 11 to clean or care for the oral cavity or teeth. Because the cleaning accessory 11 frequently touches the teeth during the process of cleaning or caring for the teeth, the cleaning accessory 11 is more severely worn out than the holding body 12 during use, and thus needs to be replaced in time. A detachable connection between the cleaning accessory 11 and the holding body 12 makes it easier for the user to replace the cleaning accessory 11 when it needs to be replaced. In this way, the user's experience when using the oral cleaning device is improved.

The cleaning accessory 11 includes a motion cleaning element 111 and a fluid cleaning element 112 arranged inside or outside the motion cleaning element 111. The motion cleaning element 111 includes a contact part 113 arranged at an upper end thereof and a supporting part 115 arranged at a lower end thereof. The contact part 113 may be a brush head provided with a plurality of brush bristles, and the supporting part 115 is detachably connected to the holding body 12. The fluid cleaning element 112 includes a rinsing part 114 arranged therein, and the rinsing part 114 may be a nozzle arranged between or outside the plurality of brush bristles. The fluid cleaning element 112 is communicated with a communicating pipe 116 to convey a fluid medium. In an embodiment, the communicating pipe 116 may be arranged in the supporting part 115. The contact part 113 and the rinsing part 114 may be arranged on the same side of the oral cleaning device.

The holding body 12 includes an actuator 121 and a pump mechanism 122. The actuator 121 is connected to the motion cleaning element 111 to drive the motion cleaning element 111 to perform a displacement motion, including but not limited to reciprocating vibration, linear motion, rotational motion and a combination thereof. The pump mechanism 122 is communicated with the fluid cleaning element 112 through a communicating path 124, where the pump mechanism 122 is configured to convey the fluid medium to the fluid cleaning element 112 through the communicating path 124 to perform a fluid shock. The actuator 121 may be a motor such as a sonic motor. The pump mechanism 122 may be a fluid pump such as a gear pump, a diaphragm pump or a piston pump.

The control component 13 is installed in the holding body 12, and an installation relationship described herein is not limited to placement inside the holding body 12, but also includes an installation connections with other components of the oral cleaning device, including but not limited to physical connections, electrical connections or signal transmission connections, etc. The control component 13 is configured to control operation of the entire oral cleaning device, and may be a Microcontroller Unit (MCU) or a Central Processing Unit (CPU) of the oral cleaning device. Specifically, the control component 13 is electrically connected to the actuator 121 and the pump mechanism 122, respectively, and is configured to control the actuator 121 and the pump mechanism 122 to operate.

The energy source 14 is arranged inside the holding body 12 and is connected to the actuator 121 and the pump mechanism 122, respectively, and is configured to supply power to the actuator 121 and the pump mechanism 122. The energy source 14 is also electrically connected to the control component 13, such that the control component 13 can obtain a voltage from the energy source 14. The energy source 14 may include one or more batteries.

The liquid storage cavity 15 is arranged inside the holding body 12 and is communicated with the pump mechanism 122. The liquid storage cavity 15 is used for storing the fluid medium, which may be a cleaning solution for cleaning the teeth or oral cavity, such as clear water, mouthwash or oral care solution.

It should be noted that, as shown in FIG. 1, position relationships between the control component 13, the energy source 14, the liquid storage cavity 15, the actuator 121 and the pump mechanism 122 inside the holding body 12 are only exemplary, and position relationships of parts inside the holding body 12 may be adjusted, which is not limited in the embodiments of the present disclosure.

In the embodiments of the present disclosure, during the operation of the oral cleaning device, the control component 13 controls the energy source 14 to supply power to the actuator 121 and the pump mechanism 122 to enable the actuator 121 and the pump mechanism 122 to operate. When the actuator 121 is in operation, the motion cleaning element 111 can be driven to perform a displacement motion. In an embodiment, the supporting part 115 may transmit a motion outputted by the actuator 121 to the contact part 113 to perform the displacement motion, such that the contact part 113 performs the displacement motion to clean oral tissues such as the tooth surfaces and the tooth gaps. When the pump mechanism 122 is in operation, the fluid medium stored in the liquid storage cavity 15 may be transported to the communicating pipe 116 in the fluid cleaning element 112 through the communicating path 124, such that the fluid medium in the communicating pipe 116 carries out the fluid shock on the oral tissues such as the tooth gaps through the rinsing part 114 in the fluid cleaning element 112 to clean the tooth gaps. Thus, a cleaning operation of the oral cleaning device is realized.

Alternatively, during the operation of the oral cleaning device, the control component 13 controls the cleaning accessory 11 to perform periodic cleaning motions. The cleaning motions include controlling the actuator 121 to drive the motion cleaning element 111 in the cleaning accessory 11 to perform the displacement motion, and also include controlling the pump mechanism 122 to transport the fluid medium to the fluid cleaning element 112 in the cleaning accessory 11 to perform the fluid shock. During the cleaning motion of the cleaning accessory 11, the control component 13 controls one of the actuator 121 and the pump mechanism 122 to keep operating and shuts off the other one. That is, the operation of the actuator 121 and the pump mechanism 122 can drive the cleaning accessory to perform the periodic cleaning motions. Each of the cleaning motions may include one or more displacement motions and one or more fluid shocks.

In this embodiment, one or more periodic cleaning motions may be performed during the cleaning motions performed by the cleaning accessory 11. Number of the periodic cleaning motions is determined according to time of the entire cleaning motion and single cycle time. For example, assuming the time of the entire cleaning motion is 2.5 min and the single cycle time is 2.5 s, 60 periodic cleaning motions can be performed during the cleaning motions performed by the cleaning accessory 11. Assuming the time of the entire cleaning motion is 2.5 min and the single cycle time is 3 s, 50 periodic cleaning motions can be performed during the cleaning motions performed by the cleaning accessory 11. In addition, in this embodiment, the plurality of periodic cleaning motions are performed continuously without interval time. In this way, continuity of the cleaning motions can be ensured, and the user's experience of using the oral cleaning device can be enhanced.

An exemplary description is made by taking an example where the oral cleaning device is a rinsing and brushing integrated electric toothbrush. The actuator 121 is the sonic motor, the pump mechanism 122 is the fluid pump, the contact part 113 in the motion cleaning element 111 is a brush head, the rinsing part 114 in the fluid cleaning element 112 is the nozzle, and the fluid medium is a liquid such as water. A detailed description is made as follows.

The actuator 121 drives the motion cleaning element 111 in the cleaning accessory 11 to perform a displacement motion, which may mean that the sonic motor drives the brush head to perform the displacement motion. During the displacement motion of the brush head, the brush bristles on the brush head touch and clean the tooth surfaces. The pump mechanism 122 transports the fluid medium to the fluid cleaning element 112 in the cleaning accessory 11 to perform the fluid shock, which may be processing in which the fluid pump delivers the water to the nozzle through the communicating path 124 and the nozzle sprays the water into the tooth gaps to rinse the tooth gaps.

In this embodiment, during the operation of the oral cleaning device, the actuator 121 and the pump mechanism 122 are controlled by the control component 13 to alternately operate, so the actuator 121 suspends operation when the pump mechanism 122 is operating. In this way, during the operation of the pump mechanism 122, that is, in a process when tooth gaps are rinsed by means of fluid shock effects of the fluid medium conveyed by the pump mechanism 122 to the fluid cleaning element 112 through the communicating path 124, the impulsive fluid shock forms a shock wave, and leap changes generate a fluid front, such as a water jet, which can cause severe damage and remove impurities at an impacted area. Compared with continuous fluid shock in the existing technologies or fluid shock whose shock force is periodically changing in strength, the fluid shock in this embodiment can produce stronger shock energy, achieve better rinsing effects without higher power consumption, and save electric energy and fluid. In addition, during the operation of the pump mechanism 122, the motion cleaning element 111 cannot be driven to perform the displacement motion because the actuator 121 suspends operation, so adverse impacts of the motion cleaning element 111 on the fluid shock effects of the fluid medium are reduced, such that the fluid medium can accurately impact into the tooth gaps, to improve the rinsing effects on the tooth gaps, thereby improving the cleaning effects of the oral cleaning device. In addition, during the operation of the oral cleaning device, because the actuator 121 and the pump mechanism 122 operate alternately, an operating mode of the pump mechanism 122 is intermittent operation, such that the rinsing process of the tooth gaps is also intermittent execution. Thus the utilization rate of the fluid can be improved, and waste of the fluid can be reduced or avoided. In addition, the alternate operation of the actuator 121 and the pump mechanism 122 can provide the user with operating time such that the user can move, when using the oral cleaning device provided in the embodiments of the present disclosure, the oral cleaning device during the shutdown of the pump mechanism 122, such that the fluid cleaning element 112 is aligned with or close to the tooth gaps, to impact and clean the tooth gaps and/or peripheries of the tooth gaps after the pump mechanism 122 is started, which can reduce ineffective or inefficient shock on the tooth surfaces, avoid waste of the fluid media, and avoid or reduce damage to other oral tissues.

A description is made below to each periodic cleaning motion performed by the cleaning accessory 11.

Alternatively, for each periodic cleaning motion, at the beginning of the cleaning motion, the control component 13 starts the actuator 121, such that a first switching operation is performed when the actuator 121 keeps operating for first preset time, where the first switching operation refers to shutting off the actuator 121 and starting the pump mechanism 122. The pump mechanism 122 is shut off when the pump mechanism 122 keeps operating for second preset time.

In this embodiment, for each periodic cleaning motion, the actuator 121 is started first, and then the pump mechanism 122 is started. In the first switching operation, the action of shutting off the actuator 121 and the action of starting the pump mechanism 122 may be performed synchronously or asynchronously, which is not specified in the present disclosure. When the plurality of periodic cleaning motions are performed in succession, the control component 13 may simultaneously or asynchronously shut off the pump mechanism 122 and start the actuator 121 when the pump mechanism 122 keeps operating for the second preset time, to enter a next cleaning motion.

To facilitate the user to hold, volume of the oral cleaning device may be reduced in the embodiments of the present disclosure. For example, volume of the liquid storage cavity 15 may be reduced compared with a conventional oral irrigator. For example, the volume of the liquid storage cavity 15 may be set within 100 ml, or even within 50 ml, etc. In the embodiments of the present disclosure, a lower pump body capacity may also be set, and output quantity of the fluid media from the pump mechanism 122 in unit time is controlled to maintain at a lower value, thereby reducing dosage of the fluid media used for the fluid shock. Furthermore, it is also required to meet time and/or frequency of rinsing to ensure that the users have sufficient time to rinse the oral tissues such as the tooth gaps. Therefore, the oral cleaning device of the embodiments of the present disclosure can meet the above requirements by configuring a duty ratio of the fluid shock to a single cleaning motion, that is, a ratio of the second preset time to the cycle time of the single cleaning motion. In an embodiment, according to related parameters such as the capacity of the liquid storage cavity 15, the flow rate of the fluid medium transported by the pump mechanism 122, and the number of rinses required, time required for continuously spraying water within single cycle time is determined for the rinsing part 114, that is, the second preset time for which the pump mechanism 122 needs to operate within the single cycle time. The ratio of the second preset time to the cycle time of the cleaning motion ranges from 10% to 40%. Alternatively, the ratio of the second preset time to the cycle time of the cleaning motion ranges from 15% to 25%. Specifically, the second preset time ranges from 200 ms to 280 ms. Further, the second preset time ranges from 230 ms to 260 ms. Different users have different needs for the first preset time. For example, time to move the oral cleaning device near the tooth gaps is different. Therefore, the first preset time may also be determined according to user input or historical cleaning data, sensing data and so on, to correspondingly adjust the second preset time and/or the cycle time of the cleaning motion.

In this embodiment, the control component 13 can intelligently calculate the above time parameters and control the actuator 121 and the pump mechanism 122 to operate. Thus, the utilization rate of the water can be further improved to achieve water-saving effects.

Alternatively, for each periodic cleaning motion, at the beginning of the cleaning motion, the control component 13 starts the pump mechanism 122. When the pump mechanism 122 keeps operating for third preset time, a second switching operation is performed, where the second switching operation refers to shutting off the pump mechanism 122 and starting the actuator 121. The actuator 121 is shut off when the actuator 121 keeps operating for fourth preset time.

In this embodiment, for each periodic cleaning motion, the pump mechanism 122 may also be started first, and then the actuator 121 is started. In the second switching operation, the action of shutting down the pump mechanism 122 and the action of starting the actuator 121 may be performed synchronously or asynchronously, which is not specified in the present disclosure. When the plurality of periodic cleaning motions are performed in succession, the control component 13 may simultaneously or asynchronously shut off the actuator 121 and start the pump mechanism 122 when the actuator 121 keeps operating for the fourth preset time, to enter a next cleaning motion.

To facilitate the user to hold, the volume of the oral cleaning device may be reduced in the embodiments of the present disclosure. For example, the volume of the liquid storage cavity 15 may be reduced compared with a conventional oral irrigator. For example, the volume of the liquid storage cavity 15 may be set within 100 ml, or even within 50 ml, etc. In the embodiments of the present disclosure, a lower pump body capacity may also be set, and output quantity of the fluid media from the pump mechanism 122 in unit time is controlled to maintain at a lower value, thereby reducing dosage of the fluid media used for the fluid shock. Furthermore, it is also required to meet time and/or frequency of rinsing to ensure that the users have sufficient time to rinse the oral tissues such as the tooth gaps. Therefore, the oral cleaning device of the embodiments of the present disclosure can meet the above requirements by configuring a duty ratio of the fluid shock to a single cleaning motion, that is, a ratio of the third preset time to the cycle time of the single cleaning motion. In an embodiment, according to related parameters such as the capacity of the liquid storage cavity 15, the flow rate of the fluid medium transported by the pump mechanism 122, and the number of rinses required, time required for continuously spraying water within single cycle time is determined for the rinsing part 114, that is, the third preset time for which the pump mechanism 122 needs to operate within the single cycle time. The ratio of the third preset time to the cycle time of the cleaning motion ranges from 10% to 40%. Alternatively, the ratio of the third preset time to the cycle time of the cleaning motion ranges from 15% to 25%. Specifically, the third preset time ranges from 200 ms to 280 ms. Further, the third preset time ranges from 230 ms to 260 ms. Different users have different needs for the fourth preset time. For example, time to move the oral cleaning device near the tooth gaps is different. Therefore, the fourth preset time may also be determined according to the user input or historical cleaning data, the sensing data and so on, to correspondingly adjust the third preset time and/or the cycle time of the cleaning motion.

In this embodiment, the control component 13 can intelligently calculate the above time parameters and control the actuator 121 and the pump mechanism 122 to operate. Thus, the utilization rate of the water can be further improved to achieve the water-saving effects.

Alternatively, the time parameters corresponding to the cleaning motion, i.e., the cycle time of the cleaning motion, the first preset time, the second preset time, the third preset time and/or the fourth preset time, may also be determined according to the user's habits of using the oral cleaning device, or the user's custom settings. Specifically, the control component 13 receives the user input or collects historical usage data to determine the cycle time of the cleaning motion, the first preset time, the second preset time, the third preset time, and/or the fourth preset time.

In this embodiment, considering that different users have different habits and needs in using the oral cleaning device, the control component 13 intelligently calculates the time parameters corresponding to the cleaning motion based on the users' habit data on using the oral cleaning device or the users' custom setting data. For example, when teeth cleaning habits of some users are quick cleaning, the control component 13 shortens the cycle time of the cleaning motion according to the users' habit data on using the oral cleaning device. For another example, when some users have tooth discomfort recently and want to shorten water spraying time spent in rinsing the tooth gaps for the oral cleaning device, the control component 13 shortens operation time of the pump mechanism 122 in a single cycle according to the users' custom setting data. In this way, the oral cleaning device can meet the users' personalized use needs, thereby enhancing the user experience.

Alternatively, the control component 13 controls the actuator 121 and the pump mechanism 122 to perform a periodic cleaning motion, and stops the periodic cleaning motion when preset cycle count or fifth preset time is reached.

In this embodiment, the fifth preset time is set time when the user uses the oral cleaning device for tooth cleaning or rinsing only. However, longer tooth cleaning time is easy to cause tooth enamel wear, but shorter tooth cleaning time is difficult to clean oral bacteria and stains. Therefore, in this embodiment, the oral cleaning device may preset total time of the cleaning motion. That is, the fifth preset time ranges from 0.5 min to 3 min, or time of the preset cycle count ranges from 0.5 min to 3 min. In an embodiment, the oral cleaning device may preset the total time of the cleaning motion between 1 min and 2.5 min, or preset cumulative time corresponding to the preset cycle count between 1 min and 2.5 min. In addition, to meet the users' individual needs, the time spent by the oral cleaning device in performing the periodic cleaning motion may be customized. In this way, the control component 13 controls the time spent in performing the periodic cleaning motion based on the preset time, and stops the periodic cleaning motion in time when the preset time is reached. The control component 13 may also set the first preset time, the second preset time, the third preset time and/or the fourth preset time based on the fifth preset time, such that the fluid medium in the liquid storage cavity 15 is basically used up when the user completes the periodic cleaning motion, which make the best use of the fluid medium and avoids waste of water resources. Thus, the user's experience in using the oral cleaning device can be further improved.

In the above, when the cleaning accessory 11 performs the periodic cleaning motions, the actuator 121 and the pump mechanism 122 alternately operate only once in a single periodic cleaning motion. However, the actuator 121 and the pump mechanism 122 may also alternately operate several times in a single periodic cleaning motion, which is not specified in the embodiments of the present disclosure. In the following, for each of the periodic cleaning motions performed by the cleaning accessory 11, an exemplary description is made where the actuator 121 and the pump mechanism 122 alternately operate twice.

Alternatively, for each periodic cleaning motion, at the beginning of the cleaning motion, the control component 13 starts the pump mechanism 122. When the pump mechanism 122 keeps operating for eighth preset time, a third switching operation is performed, where the third switching operation refers to shutting off the pump mechanism 122 and starting the actuator 121. When the actuator 121 keeps operating for ninth preset time, a fourth switching operation is performed, where the fourth switching operation refers to shutting off the actuator 121 and starting the pump mechanism 122 again. Furthermore, the third switching operation is performed again when the pump mechanism 122 keeps operating for tenth preset time. The actuator 121 is shut off when the actuator 121 keeps operating for eleventh preset time. The tenth preset time is longer than the eighth preset time, and the eleventh preset time is longer than the ninth preset time.

In this embodiment, for each periodic cleaning motion, when the actuator 121 and the pump mechanism 122 operate alternately each time, the pump mechanism 122 is started first, and then the actuator 121 is started. In the third switching operation, the action of shutting down the pump mechanism 122 and the action of starting the actuator 121 may be performed synchronously or asynchronously. In the fourth switching operation, the action of shutting off the actuator 121 and the action of starting the pump mechanism 122 may be performed synchronously or asynchronously, which is not specified in the present disclosure. When the plurality of periodic cleaning motions are performed in succession, the control component 13 may simultaneously or asynchronously shut off the actuator 121 and start the pump mechanism 122 when the actuator 121 keeps operating for the eleventh preset time, to enter a next cleaning motion.

In this embodiment, for each periodic cleaning motion, when the actuator 121 and the pump mechanism 122 alternately operate twice, the actuator 121 and the pump mechanism 122 operate twice, respectively. When the user cleans the oral cavity by using the oral cleaning device, the oral cavity may feel that the fluid medium conveyed by the pump mechanism 122 performs the fluid shock twice. In the fluid shock twice, the first fluid shock is performed for assistant positioning, to adjust a rinsing position of the fluid medium during the second fluid shock. During the first fluid shock, when a shock position of the fluid medium is not the position required for oral rinsing, the position of the cleaning accessory 11 is adjusted according to short operation time of the actuator 121, to achieve adjustment of the shock position of the fluid medium during the second fluid shock, such that the fluid medium can accurately rinse a target position when the second fluid shock is performed. In this way, positioned rinsing of the target position is achieved, so accuracy of rinsing is improved. In the embodiments of the present disclosure, time of second operation of the pump mechanism 122 may be set to be longer than time of first operation of the pump mechanism 122. That is, the tenth preset time is longer than the eighth preset time. Further, the eighth preset time may be set between 80 ms and 120 ms, and the tenth preset time may be set between 120 ms and 250 ms. In this way, by setting shorter time of the first operation of the pump mechanism 122, even if the target position of the oral cavity is not rinsed during the first fluid shock, less impact is caused to the oral cavity due to the shorter shock time of the first fluid shock, which can reduce discomfort of the user's oral cavity and reduce waste of fluid. During the operation of the pump mechanism 122, the pump mechanism 122 needs certain operating time to improve its operating power. By setting longer time of the second operation of the pump mechanism 122, the pump mechanism 122 may have sufficient time to improve its power to reach a target power and increase a shock pressure, such that the fluid medium has a greater shock force when the second fluid shock is performed. After the target position is located, the target position is rinsed using the fluid medium having a greater shock force, which can improve the rinsing effects at the target position to better clean the target position of the oral cavity.

It is to be understood that because both the actuator 121 and the pump mechanism 122 operate twice, when the user cleans the oral cavity using the oral cleaning device, the actuator 121 drives the motion cleaning element 111 to perform the displacement motions twice. That is, the oral cavity where the cleaning accessory 11 is currently located is cleaned twice. To better clean the user's oral cavity, in the embodiments of the present disclosure, the time of the second operation of the actuator 121 may also be set to be longer than the time of the first operation of the actuator 121. That is, the eleventh preset time is longer than the ninth preset time. In this embodiment, during the first fluid shock, when the shock position of the fluid medium is not the target position required for oral rinsing, based on the time of the first operation of the actuator 121, time is provided to the user to adjust the position of the cleaning accessory 11, such that the fluid medium hits the target position during the second operation of the pump mechanism 122. At the end of the second operation of the pump mechanism 122 and at the beginning of the second operation of the actuator 121, the cleaning accessory 11 may clean the target position cleaned by the fluid for longer time of displacement motion cleaning, such that the target position is cleaned more thoroughly. Therefore, by setting the time of the second operation of the actuator 121 to be longer than the time of the first operation of the actuator 121, the cleaning effects of the cleaning accessory 11 at the corresponding position can be improved to better clean the oral cavity. Thus, the cleaning effects of the oral cleaning device are improved.

Further, the ninth preset time may be set between 80 ms and 120 ms, and the eleventh preset time may be set between 600 ms and 1000 ms. In this embodiment, the ninth preset time is time provided for the user to appropriately adjust the position of the cleaning accessory 11. Within the ninth preset time, that is, before the second operation of the pump mechanism 122, the user may adjust the position of the cleaning accessory 11, such that when the cleaning accessory 11 performs the fluid shock, the shock position of the fluid medium is aligned with the target position required for oral cleaning. When the ninth preset time is too short, the user cannot react in time and thus cannot accurately adjust the position of the cleaning accessory 11 in a short time. When the ninth preset time is too long, the user's waiting time may be prolonged, which may reduce the user experience. In addition, when the total cycle time is unchanged, if the ninth preset time is too long, it may also shorten the operation time of the pump mechanism 122 or even cause time of the fluid shock to be too short, and it may also lead to insufficient pressure of the fluid shock, thereby reducing cleaning power. Therefore, the ninth preset time needs to be set with reference to the above time range, and should not be too long or too short.

Alternatively, for each periodic cleaning motion, at the beginning of the cleaning motion, the control component 13 starts the actuator 121, such that a fifth switching operation is performed when the actuator 121 keeps operating for twelfth preset time, where the fifth switching operation refers to shutting off the actuator 121 and starting the pump mechanism 122. When the pump mechanism 122 keeps operating for thirteenth preset time, a sixth switching operation is performed, where the sixth switching operation refers to shutting off the pump mechanism 122 and starting the actuator 121 again. Furthermore, the fifth switching operation is performed again when the actuator 121 keeps operating for fourteenth preset time. The pump mechanism 122 is shut off when the pump mechanism 122 keeps operating for fifteenth preset time. The fourteenth preset time is longer than the twelfth preset time, and the fifteenth preset time is longer than the thirteenth preset time.

In this embodiment, for each periodic cleaning motion, when the actuator 121 and the pump mechanism 122 operate alternately each time, the actuator 121 is started first, and then the pump mechanism 122 is started. In the fifth switching operation, the action of shutting off the actuator 121 and the action of starting the pump mechanism 122 may be performed simultaneously or asynchronously. In the sixth switching operation, the action of shutting down the pump mechanism 122 and the action of starting the actuator 121 may be performed synchronously or asynchronously, which is not specified in the present disclosure. When the plurality of periodic cleaning motions are performed in succession, the control component 13 may simultaneously or asynchronously shut off the pump mechanism 122 and start the actuator 121 when the pump mechanism 122 keeps operating for the fifteenth preset time, to enter a next cleaning motion.

In this embodiment, for each periodic cleaning motion, when the actuator 121 and the pump mechanism 122 alternately operate twice, the actuator 121 and the pump mechanism 122 operate twice, respectively. When the user cleans the oral cavity by using the oral cleaning device, the oral cavity may feel that the fluid medium conveyed by the pump mechanism 122 performs the fluid shock twice. In the fluid shock twice, the first fluid shock is performed for assistant positioning, to adjust a rinsing position of the fluid medium during the second fluid shock. During the first fluid shock, when the shock position of the fluid medium is not the target position required for oral rinsing, the position of the cleaning accessory 11 may be adjusted according to short operation time of the actuator 121, to achieve adjustment of the shock position of the fluid medium during the second fluid shock, such that the fluid medium can accurately rinse the target position when the second fluid shock is performed. In this way, positioned rinsing of the target position is achieved, so the accuracy of rinsing is improved. In the embodiments of the present disclosure, the time of the second operation of the pump mechanism 122 may be set to be longer than the time of the first operation of the pump mechanism 122. That is, the fifteenth preset time is longer than the thirteenth preset time. Further, the thirteenth preset time may be set between 80 ms and 120 ms, and the fifteenth preset time may be set between 120 ms and 250 ms. In this way, by setting shorter time of the first operation of the pump mechanism 122, even if the target position of the oral cavity is not rinsed during the first fluid shock, less impact is caused to the oral cavity due to the shorter shock time of the first fluid shock, which can reduce discomfort of the user's oral cavity and reduce waste of fluid. During the operation of the pump mechanism 122, the pump mechanism 122 needs certain operating time to improve its operating power. By setting longer time of the second operation of the pump mechanism 122, the pump mechanism 122 may have sufficient time to improve its power to reach the target power and increase the shock pressure, such that the fluid medium has a greater shock force when the second fluid shock is performed. After the target position is located, the target position is rinsed using the fluid medium having a greater shock force, which can improve the rinsing effects at the target position to better clean the target position of the oral cavity.

It is to be understood that because both the actuator 121 and the pump mechanism 122 operate twice, when the user cleans the oral cavity using the oral cleaning device, the actuator 121 drives the motion cleaning element 111 to perform the displacement motions twice. That is, the oral cavity where the cleaning accessory 11 is currently located is cleaned twice. To better clean the user's oral cavity, in the embodiments of the present disclosure, the time of the second operation of the actuator 121 may also be set to be longer than the time of the first operation of the actuator 121. That is, the fourteenth preset time is longer than the twelfth preset time. In this embodiment, based on the time of the first operation of the actuator 121, time is provided to the user to preadjust the position of the fluid cleaning element 112 in the cleaning accessory 11, such that the fluid medium hits the target position as much as possible during the first operation of the pump mechanism 122. At the end of the first operation of the pump mechanism 122 and at the beginning of the second operation of the actuator 121, in one aspect, during the first fluid shock, if the shock position of the fluid medium is still not the target position required for oral rinsing, this means that the preadjusted position of the fluid cleaning element 122 is not ideal. In this case, during the second operation of the actuator 121, the user may adjust the position of the fluid cleaning element 112 again, such that the fluid medium hits the target position during the second operation of the pump mechanism. In another aspect, the cleaning accessory 11 may clean the target position cleaned by the fluid for longer time of displacement motion cleaning, such that the target position is cleaned more thoroughly. Therefore, by setting the time of the second operation of the actuator 121 to be longer than the time of the first operation of the actuator 121, the cleaning effects of the cleaning accessory 11 at the corresponding position can be improved to better clean the oral cavity. Thus, the cleaning effects of the oral cleaning device are improved.

Further, the twelfth preset time may be set between 80 ms and 120 ms, and the fourteenth preset time may be set between 600 ms and 1000 ms. In this embodiment, the twelfth preset time is time provided for the user to preadjust the position of the fluid cleaning element 112 before the pump mechanism 122 drives the fluid cleaning element 112 for the first time to perform the fluid shock. Within the twelfth preset time, that is, before the first operation of the pump mechanism 122, the user may preadjust the position of the fluid cleaning element 112, such that when the fluid cleaning element 112 performs the fluid shock, the shock position of the fluid medium is aligned, as much as possible, with the target position required for oral cleaning. When the twelfth preset time is too short, the user cannot react in time and thus cannot accurately adjust the position of the fluid cleaning element 112 in a short time. When the twelfth preset time is too long, the user's waiting time may be prolonged, which may reduce the user experience. In addition, when the total cycle time is unchanged, if the twelfth preset time is too long, it may also shorten the operation time of the pump mechanism 122 or even cause time of the fluid shock to be too short, and it may also lead to insufficient pressure of the fluid shock, thereby reducing the cleaning power. Therefore, to ensure the cleaning power of the oral cleaning device, the twelfth preset time should be set with reference to the above time range, and should not be too long or too short.

Alternatively, when the control component 13 controls the actuator 121 and the pump mechanism 122 to operate such that the cleaning accessory 11 performs a plurality of periodic cleaning motions, where operating time of the actuator 121 and/or operating time of the pump mechanism 122 are different in the plurality of periodic cleaning motions.

In this embodiment, when the cleaning accessory 11 performs the plurality of periodic cleaning motions, by setting the operating time of the actuator 121 and/or the operating time of the pump mechanism 122 to be different in each periodic cleaning motion, the plurality of periodic cleaning motions may have different cleaning motion modes. In this way, diversified cleaning motion modes may be achieved when the cleaning accessory 11 performs the plurality of periodic cleaning motions. For example, when the user uses the oral cleaning device, to obtain experience feeling of gradually improving cleaning intensity, the time of the cleaning motions needs to gradually increase when the cleaning accessory 11 performs the plurality of periodic cleaning motions. That is, time spent in each of the periodic cleaning motions is longer and longer. Thus, during the plurality of periodic cleaning motions, longer and longer operating time of the actuator 121 and/or pump mechanism 122 may be set as the cycle count increases. Alternatively, when the user uses the oral cleaning device, to obtain the experience feeling of reducing the cleaning intensity, when the cleaning accessory 11 performs the plurality of periodic cleaning motions, the time of the cleaning motions gradually decreases. That is, the time spent in each of the periodic cleaning motions is shorter and shorter. Thus, during the plurality of periodic cleaning motions, shorter and shorter operating time of the actuator 121 and/or pump mechanism 122 may be set as the cycle count increases. Thus, when the plurality of periodic cleaning motions are performed, by setting the operating time of the actuator 121 and/or the operating time of the pump mechanism 122 to be different in each periodic cleaning motion, diversified cleaning motion modes may be achieved to meet the user's individual needs, to further enhance the user's experience feeling when using the oral cleaning device.

It should be noted that in this embodiment, the user may also have the experience feeling of obtaining smooth cleaning intensity during the use of the oral cleaning device. That is, when the cleaning accessory 11 needs to perform the plurality of periodic cleaning motions, time of each of the periodic cleaning motions remains stable. To further meet the user's individual needs, in the plurality of periodic cleaning motions, the operating time of the actuator 121 and/or the operating time of the pump mechanism 122 may be set to be equal, to ensure the same cleaning intensity for each of the plurality of periodic cleaning motions. Of course, by setting the operating time of the actuator 121 and/or pump mechanism 122 in each periodic cleaning motion, other requirements of the user may be further met to further enhance the user experience in using the oral cleaning device, with the same or similar implementation manners as those in the above embodiments, which are not specified in the embodiments of the present disclosure.

A description is made below to control processes performed by the control component 13 before the cleaning accessory 11 performs the periodic cleaning motion.

Alternatively, before the periodic cleaning motion is performed, the control component 13 determines operating parameters of the actuator 121 and operating parameters of the pump mechanism 122 in response to user input or sensing signal. When the actuator 121 is the motor, the operating parameters of the actuator 121 at least include parameter information such as an operating frequency and a duty ratio. When the pump mechanism 122 is the fluid pump, the operating parameters of the pump mechanism 122 at least include the parameter information such as the operating frequency and the duty ratio.

For example, operating modes of the oral cleaning device at least include a cleaning mode, a rinsing mode, and a standby mode. When the oral cleaning device is operating in the cleaning mode, the function of cleaning the tooth surfaces is realized, and only the actuator 121 of the oral cleaning device is operating in this mode. When the oral cleaning device is operating in the rinsing mode, the oral cleaning device performs the functions of cleaning the tooth surfaces and rinsing the tooth gaps, and both the actuator 121 and the pump mechanism 122 of the oral cleaning device may perform the periodic cleaning motions. When the oral cleaning device is operating in the standby mode, the oral cleaning device keeps operating with lower power consumption, and both the actuator 121 and the pump mechanism 122 of the oral cleaning device are shut off in this mode. In addition, each operating mode in the oral cleaning device may correspond to a preset operating parameter of the actuator 121 and a preset operating parameter of the pump mechanism 122.

To ensure that the periodic cleaning motion can be performed normally, before the periodic cleaning motion is performed, it is required to determine the operating parameter of the actuator 121 and the operating parameter of the pump mechanism 122 during the cleaning motion. The operating parameter of the actuator 121 and the operating parameter of the pump mechanism 122 are indirectly determined by determining the operating mode of the oral cleaning device. Specifically, the control component 13 in the oral cleaning device determines an operating mode according to the user's operation, and determines the preset operating parameter of the actuator 121 and the preset operating parameter of the pump mechanism 122, which correspond to the operating mode of the user's operation. Alternatively, when the oral cleaning device is operating in a certain operating mode, the control component 13 senses the operating mode of the oral cleaning device by means of a sensing element such as a sensor, and determines the preset operating parameter of the actuator 121 and the preset operating parameter of the pump mechanism 122, which correspond to the sensed operating mode.

In the embodiments of the present disclosure, to allow the user to better adapt to the periodic cleaning motion performed by the oral cleaning device, or to improve the cleaning effects, the control component 13 may separately control the operation of the actuator 121 before or after the periodic cleaning motion according to cleaning requirements of the user or according to mode settings, to drive the contact part 113 in the motion cleaning element 111 to perform a displacement motion on the tooth surfaces, or the pump mechanism 122 may be separately controlled to operate the fluid cleaning element 112 to transport the fluid media to the rinsing part 114 to perform the fluid shock. That is, before or after the periodic cleaning motion, the control component 13 may control the actuator 121 or the pump mechanism 122 to operate separately.

Alternatively, precontrol of the operation of the actuator 121 and/or pump mechanism 122 may be as below. Before the periodic cleaning motion, the control component 13 controls the actuator 121 to operate and control the pump mechanism 122 to be shut off.

Before the periodic cleaning motion, the control component 13 can precontrol the operation of the actuator 121. Therefore, tissues such as the tooth surfaces and the tooth gaps are cleaned in advance, such that the oral cavity is more clean, to provide a certain cleaning basis for the periodic cleaning motion. Alternatively, in this embodiment, the user may adapt to the oral cleaning device. That is, the user may adapt to the process in which the actuator 121 drives the contact part 113 in the motion cleaning element 111 to perform the displacement motion on the tooth surfaces. In this process, to further improve the utilization rate of the water, the pump mechanism 122 may be controlled to shut off.

Further, a process of precontrolling, by the control component 13, the actuator 121 to operate is as follows. The control component 13 determines the operating mode of the actuator 121 in response to the user input or sensing signal, and controls the actuator to operate according to the operating mode.

For example, pre-operating modes of the actuator 121 include at least two operating modes, where a first mode is an ascending mode. That is, operating intensity of the actuator 121 is gradually increased over time by controlling the operating parameter of the actuator 121. A second mode is a steady mode. That is, the actuator 121 is controlled to maintain a stable operating parameter over time, such that the operating intensity of the actuator 121 remains stable. The process of determining the pre-operating mode is as below. The control component 13 operates according to the operating mode set by the user in response to the user input; or the control component 13 automatically senses the operating mode by means of the sensor.

Further, when the actuator 121 operates according to the first mode (the ascending mode), the control component 13 outputs an initial operating parameter to the actuator 121, to control the actuator 121 to start. Whenever the actuator 121 operates for sixth preset time, the control component determines an operating parameter of a current time node, and controls the actuator 121 to operate according to the operating parameter of the current time node. When the actuator 121 keeps operating for seventh preset time, the actuator 121 is controlled to operate according to a preset target operating parameter. The sixth preset time and the seventh preset time may be automatically adjusted according to user input settings or historical cleaning data. In an embodiment, the sixth preset time is 100 ms and the seventh preset time is 3 s.

In this embodiment, the operating parameter of the actuator 121 needs to be redetermined or adjusted every other sixth preset time, such that the actuator 121 can operate according to the adjusted operating parameter, to gradually increase the operating intensity of the actuator 121. In addition, after the actuator 121 keeps operating for seventh preset time, the actuator 121 is controlled to operate according to the preset target operating parameter. For example, the target operating parameter is the preset operating parameter corresponding to the rinsing mode of the oral cleaning device.

Further, the process of redetermining the operating parameter of the actuator 121 may be as follows. The operating parameter of the current time node is determined according to an operating parameter of a previous time node and a preset variable. The operating parameter of the current time node is sum of the operating parameter of the previous time node and the preset variable, where the preset variable may be a fixed variable or a mutable variable.

In this embodiment, an exemplary description is made by taking an example where the oral cleaning device is a rinsing and brushing integrated electric toothbrush. The actuator 121 is the sonic motor, the pump mechanism 122 is the fluid pump, the contact part 113 in the motion cleaning element 111 is the brush head, the rinsing part 114 in the fluid cleaning element 112 is the nozzle, and the fluid medium is the water. For example, it is assumed that the operating parameter of the actuator 121 or sonic motor is the duty ratio, the preset variable (fixed variable) is duty ratio increment, and the sixth preset time is 100 ms. In this way, when the sonic motor is operating in the ascending mode, the duty ratio of the sonic motor at the current moment is increased according to the duty ratio increment every other 100 ms.

For another example, it is assumed that the sonic motor keeps operating in the ascending mode for 500 ms, the duty ratio increment is 5%, and the initial operating parameter or initial duty ratio is 10%, the duty ratio of the sonic motor at the current time is DC=DC0+DCc*N, where DC01 represents the initial operating parameter or initial duty ratio, DCc represents the duty ratio increment, N represents number of time intervals (i.e. 500 ms/100 ms=5), and the duty ratio DC of the sonic motor at the current moment is calculated to be 35%.

Further, the process of redetermining the operating parameter of the actuator 121 may also be as follows. The operating parameter of the current time node is determined according to a preset mapping table or operating parameter sequence.

In this embodiment, the operating parameter of each time node may be preset through the operating parameter sequence or mapping table when the actuator 121 is operating in the ascending mode.

An exemplary description is made by taking an example where the oral cleaning device is the rinsing and brushing integrated electric toothbrush. The actuator 121 is the sonic motor, the pump mechanism 122 is the fluid pump, the contact part 113 in the motion cleaning element 111 is the brush head, the rinsing part 114 in the fluid cleaning element 112 is the nozzle, and the fluid medium is the water. For example, it is supposed the operating parameter of the actuator 121 or sonic motor is the duty ratio, the operating parameter sequence is set to 15%-20%-25%-30%-35%, the initial operating parameter or initial duty ratio is 10%, and the sixth preset time is 100 ms. In this case, when the sonic motor is operating in the ascending mode, the sonic motor operates according to the duty ratio set based on the operating parameter sequence every other 100 ms.

For another example, when the sonic motor keeps operating for 100 ms, the operating duty ratio of the sonic motor is adjusted from 10% to 15%. When the sonic motor keeps operating for 200 ms, the operating duty ratio of the sonic motor is adjusted from 15% to 20%.

Further, in this embodiment, after the actuator 121 operates in the ascending mode, to ensure that the operating parameter of the actuator 121 matches the preset operating parameter corresponding to the oral cleaning device operating in the rinsing mode, the actuator 121 is smoothly transitioned from the rinsing mode to the ascending mode. The control component 13 determines the variable and/or the initial operating parameter during operation of the ascending mode according to the preset target operating parameter and the number of the time intervals. For example, when the operating parameter of the actuator 121 is the duty ratio and the variable is a fixed value, a ratio of a value of the target operating parameter to the number of the time intervals is calculated, to obtain the duty ratio to be increased for each time interval, that is, a variable, which may be set as the initial operating parameter, i.e. the operating parameter when the actuator 121 is started.

An exemplary description is made by taking an example where the oral cleaning device is the rinsing and brushing integrated electric toothbrush. The actuator 121 is the sonic motor, the pump mechanism 122 is the fluid pump, the contact part 113 in the motion cleaning element 111 is the brush head, the rinsing part 114 in the fluid cleaning element 112 is the nozzle, and the fluid medium is the water. For example, it is assumed that the operating parameter of the actuator 121 or the sonic motor is the duty ratio and the variable is the fixed variable, the preset target operating parameter is 90% and the number of the time intervals is 8, both the initial operating parameter and the variable are 90%/ (8+1) =10%. After the sonic motor operates in the ascending mode according to the initial operating parameter 10% and the variable 10%, the target operating parameter 90% is reached exactly, and appearance of too high operating parameter does not happen. In this way, the steady transition from the ascending mode to the rinsing mode is ensured.

Further, when the actuator 121 operates according to the second mode (the steady mode), the control component 13 outputs the preset target operating parameters to the actuator 121 to control the actuator 121 to start. The target operating parameter may be the preset operating parameter corresponding to the oral cleaning device operating in the rinsing mode. In this embodiment, before the periodic cleaning motion, the actuator 121 keeps stably operating for a period of time with the preset target operating parameter in advance, such that the user adapts to the periodic cleaning motion.

Alternatively, the process of precontrolling the operation of the actuator 121 and/or pump mechanism 122 may also include: before or after the periodic cleaning motion, simultaneously controlling, by the control component 13, the actuator 121 and the pump mechanism 122 to operate.

In this embodiment, to allow the user to better adapt to the periodic cleaning motion performed by the oral cleaning device, that is, to allow the user to adapt to the process in which the actuator 121 drives the contact part 113 in the motion cleaning element 111 to perform the displacement motion on the tooth surfaces, and to allow the user to adapt to the process in which the pump mechanism 122 conveys the fluid media to the rinsing part 114 in the fluid cleaning element 112 to perform the fluid shock on the tooth gaps, the control component 13 may simultaneously control, before the periodic cleaning motion, the actuator 121 and the pump mechanism 122 to operate.

Based on the oral cleaning device shown in FIG. 1, the embodiments of the present disclosure provide a control method for the oral cleaning device. An execution body of the control method is the control component of the oral cleaning device. With reference to FIG. 2, the control method includes following steps.

In Step S21, the control component controls the actuator and the pump mechanism to operate, such that the cleaning accessory performs the periodic cleaning motion.

In Step S22, during the cleaning motion, the control component keeps one of the actuator and the pump mechanism operating and shuts off the other one.

Alternatively, the control component starts the actuator at the beginning of the cleaning motion. When the actuator keeps operating for first preset time, a first switching operation is performed, where the first switching operation includes: shutting off the actuator and starting the pump mechanism. When the pump mechanism keeps operating for second preset time, the pump mechanism is shut off.

Alternatively, the ratio of the second preset time to the cycle time of the cleaning motion ranges from 10% to 40%.

Alternatively, the ratio of the second preset time to the cycle time of the cleaning motion ranges from 15% to 25%.

Alternatively, the second preset time ranges from 200 ms to 280 ms.

Alternatively, the control component starts the pump mechanism at the beginning of the cleaning motion. When the pump mechanism keeps operating for third preset time, a second switching operation is performed, where the second switching operation includes: shutting off the pump mechanism and starting the actuator. The actuator is shut off when the actuator keeps operating for fourth preset time.

Alternatively, the ratio of the third preset time to the cycle time of the cleaning motion ranges from 10% to 40%.

Alternatively, the ratio of the third preset time to the cycle time of the cleaning motion ranges from 15% to 25%.

Alternatively, the third preset time ranges from 200 ms to 280 ms.

Alternatively, the control component receives the user input or collects historical usage data to determine the cycle time of the cleaning motion, the first preset time, the second preset time, the third preset time, and/or the fourth preset time.

Alternatively, when the control component controls the actuator and the pump mechanism to operate such that the cleaning accessory performs a plurality of periodic cleaning motions, operating time of the actuator and/or operating time of the pump mechanism are different in the plurality of periodic cleaning motions.

Alternatively, the control component starts the pump mechanism at the beginning of the cleaning motion. When the pump mechanism keeps operating for eighth preset time, a third switching operation is performed, where the third switching operation includes: shutting off the pump mechanism and starting the actuator. When the actuator keeps operating for ninth preset time, a fourth switching operation is performed, where the fourth switching operation includes: shutting off the actuator and starting the pump mechanism again. The third switching operation is performed again when the pump mechanism keeps operating for tenth preset time. The actuator is shut off when the actuator keeps operating for eleventh preset time. The tenth preset time is longer than the eighth preset time, and the eleventh preset time is longer than the ninth preset time.

Alternatively, the eighth preset time ranges from 80 ms to 120 ms, and/or the ninth preset time ranges from 80 ms to 120 ms.

Alternatively, the tenth preset time ranges from 120 ms to 250 ms, and/or the eleventh preset time ranges from 600 ms to 1000 ms.

Alternatively, the control component starts the actuator at the beginning of the cleaning motion. When the actuator keeps operating for twelfth preset time, a fifth switching operation is performed, where the fifth switching operation includes: shutting off the actuator and starting the pump mechanism. When the pump mechanism keeps operating for thirteenth preset time, a sixth switching operation is performed, where the sixth switching operation includes: shutting off the pump mechanism and starting the actuator again. When the actuator keeps operating for fourteenth preset time, the fifth switching operation is performed again. When the pump mechanism keeps operating for fifteenth preset time, the pump mechanism is shut off. The fourteenth preset time is longer than the twelfth preset time, and the fifteenth preset time is longer than the thirteenth preset time.

Alternatively, the twelfth preset time ranges from 80 ms to 120 ms, and/or the thirteenth preset time ranges from 80 ms to 120 ms.

Alternatively, the fourteenth preset time ranges from 600 ms to 1000 ms, and/or the fifteenth preset time ranges from 120 ms to 250 ms.

The control method for the oral cleaning device provided in the embodiments of the present disclosure corresponds to the actions of the control component in the above embodiment, and its implementations principles and technical effects are similar, which are not to be repeated here.

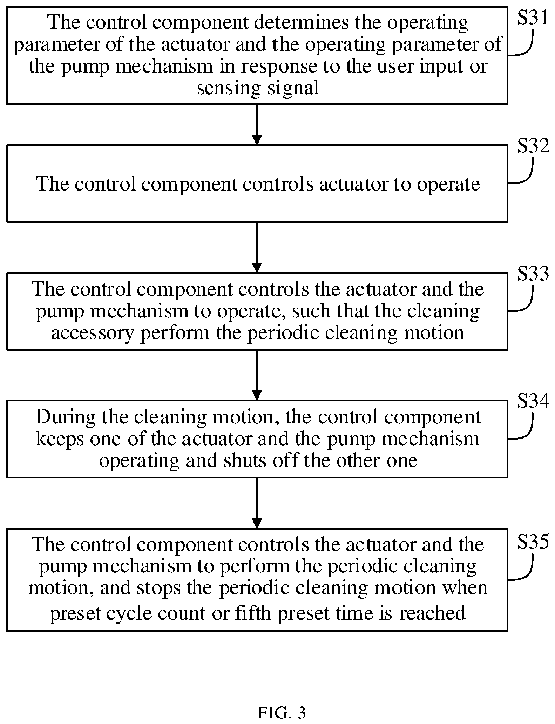

Based on the oral cleaning device shown in FIG. 1, the embodiments of the present disclosure provide a control method for the oral cleaning device. An execution body of the control method is the control component of the oral cleaning device. With reference to FIG. 3, the control method includes following steps.

In Step S31, the control component determines the operating parameter of the actuator and the operating parameter of the pump mechanism in response to the user input or sensing signal.

In Step S32, the control component controls actuator to operate.

In Step S21, the control component controls the actuator and the pump mechanism to operate, such that the cleaning accessory performs the periodic cleaning motion.

In Step S34, during the cleaning motion, the control component keeps one of the actuator and the pump mechanism operating and shuts off the other one.

In Step S35, the control component controls the actuator and the pump mechanism to perform the periodic cleaning motion, and stops the periodic cleaning motion when preset cycle count or fifth preset time is reached.

Alternatively, the control component determines an operating mode of the actuator in response to the user input or sensing signal, and controls the actuator to operate according to the operating mode.

Alternatively, the operating mode is a first mode, and the control component outputs the initial operating parameter to the actuator and controls the actuator to start. Whenever the actuator operates for sixth preset time, the control component determines an operating parameter of a current time node, and controls the actuator to operate according to the operating parameter of the current time node. When the actuator keeps operating for seventh preset time, the control component controls the actuator to operate according to the preset target operating parameter.

Alternatively, determining the operating parameter of the current time node includes: determining the operating parameter of the current time node according to an operating parameter of a previous time node and a preset variable; or determining the operating parameter of the current time node according to a preset mapping table or an operating parameter sequence.

Alternatively, the control component determines the variable and/or initial operating parameter according to the preset target operating parameter and number of time intervals.

Alternatively, the control component controls the pump mechanism to operate before the periodic cleaning motion.

The control method for the oral cleaning device provided in the embodiments of the present disclosure corresponds to the actions of the control component in the above embodiment, and its implementations principles and technical effects are similar, which are not to be repeated here.

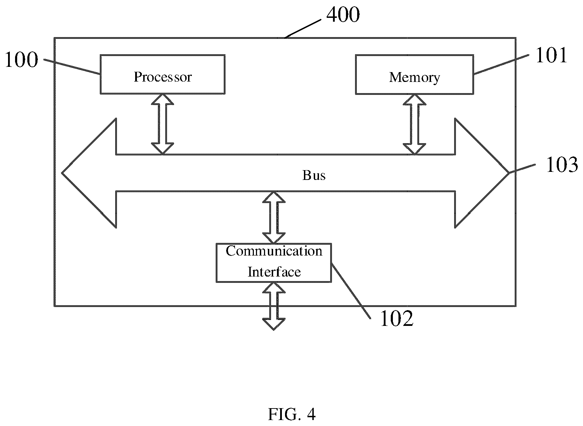

With reference to FIG. 4, the embodiments of the present disclosure provide an electronic device 400, which includes a processor 100 and a memory 101. Alternatively, the electronic device 400 may also include a communication interface 102 and a bus 103. Communications among the processor 100, the communication interface 102 and the memory 101 may be achieved by means of the bus 103. The communication interface 102 may be used for information transmission. The processor 100 may invoke logical instructions in the memory 101 to execute the control method for the oral cleaning device in the above embodiments.

In addition, when the logic instructions in the foregoing memory 101 can be implemented in the form of a software functional unit and is sold or used as an independent product, the logic instructions can be stored in a computer-readable storage medium.

As a computer-readable storage medium, the memory 101 may be used to store software programs, computer executable programs, and program instructions/modules corresponding to the method in the embodiments of the present disclosure. The processor 100 executes functional applications and data processing by running the program instructions/modules stored in the memory 101, thus implementing the control method for the oral cleaning device in the above embodiments.

The memory 101 may include a program storage area and a data storage area, where the program storage area may store an operating system, application programs required for at least one function; and the data storage area may store data created according to the use of a terminal device. In addition, the memory 101 may include a high-speed random access memory, and may also include a non-volatile memory.

The embodiments of the present disclosure provide a storage medium storing computer executable instructions configured to execute the control method for the oral cleaning device in the above embodiments.

The above storage medium may be a transient computer readable storage medium or a non-transient computer readable storage medium.

The above descriptions and the accompanying drawings fully illustrate the embodiments of the present disclosure to enable those skilled in the art to practice them. Other embodiments may include structural, logical, electrical, process, and other changes. The embodiments only represent possible changes. Unless explicitly specified, independent components and functions are optional, and an operation sequence may change. Portions and features of some embodiments can be included in, or substituted for, those of other embodiments.

## Claims

1. An oral cleaning device, comprising:
a cleaning accessory (11) comprising a motion cleaning element (111) and a fluid cleaning element (112);
a holding body (12) connected to the cleaning accessory, the holding body comprising:
an actuator (121) configured to drive the motion cleaning element to perform a displacement motion; and
a pump mechanism (122) communicated with the fluid cleaning element, the pump mechanism being configured to convey a fluid medium to the fluid cleaning element through a communicating path to perform fluid shock; and
a control component (13) configured to control operation of the actuator and the pump mechanism to enable the cleaning accessory to perform a periodic cleaning motion;
wherein during the cleaning motion, the control component keeps one of the actuator and the pump mechanism operating and shuts off the other one.

2. The device according to claim 1, wherein at a beginning of the cleaning motion, the control component starts the actuator first;
when the actuator keeps operating for first preset time, a first switching operation is performed, the first switching operation comprising: shutting off the actuator and starting the pump mechanism; and
when the pump mechanism keeps operating for second preset time, the pump mechanism is shut off; or,
at a beginning of the cleaning motion, the control component starts the pump mechanism first;
when the pump mechanism keeps operating for third preset time, a second switching operation is performed, the second switching operation comprising: shutting off the pump mechanism and starting the actuator; and
the actuator is shut off when the actuator keeps operating for fourth preset time.

3. The device according to claim 2, wherein a ratio of the second preset time to cycle time of the cleaning motion ranges from 10% to 40%.

4. The device according to claim 2 or 3, wherein the second preset time or the third preset time ranges from 200 ms to 280 ms.

5. The device according to claim 2, wherein a ratio of the third preset time to cycle time of the cleaning motion ranges from 10% to 40%.

6. The device according to claim 2, wherein the control component is configured to receive user input or collect historical usage data, and determine cycle time of the cleaning motion, the first preset time, and/or the second preset time.

7. The device according to claim 2, wherein the control component is configured to receive user input or collect historical usage data, and determine cycle time of the cleaning motion, the third preset time, and/or the fourth preset time.

8. The device according to claim 1, wherein the control component controls one of the actuator and the pump mechanism or simultaneously controls the actuator and the pump mechanism to operate before or after the periodic cleaning motion.

9. The device according to claim 8, wherein the control component determines an operating mode of the actuator in response to user input or sensing signal, and controls the actuator to operate according to the operating mode.

10. The device according to claim 9, wherein the operating mode is a first mode, and the control component is configured to output an initial operating parameter to the actuator and control the actuator to start;
whenever the actuator operates for sixth preset time, the control component determines an operating parameter of a current time node, and controls the actuator to operate according to the operating parameter of the current time node; and
when the actuator keeps operating for seventh preset time, the control component controls the actuator to operate according to a preset target operating parameter.

11. The device according to claim 10, wherein determining the operating parameter of the current time node comprises:
determining the operating parameter of the current time node according to an operating parameter of a previous time node and a preset variable; or
determining the operating parameter of the current time node according to a preset mapping table or an operating parameter sequence.

12. The device according to claim 10, wherein the control component determines the variable and/or initial operating parameter according to the preset target operating parameter and number of time intervals.

13. The device according to claim 1, wherein when the control component controls the actuator and the pump mechanism to operate such that the cleaning accessory performs a plurality of periodic cleaning motions, operating time of the actuator and/or operating time of the pump mechanism are different in the plurality of periodic cleaning motions.

14. The device according to claim 1, wherein at a beginning of the cleaning motion, the control component starts the pump mechanism first;
when the pump mechanism keeps operating for eighth preset time, a third switching operation is performed, the third switching operation comprising: shutting off the pump mechanism and starting the actuator;
when the actuator keeps operating for ninth preset time, a fourth switching operation is performed, the fourth switching operation comprising: shutting off the actuator and starting the pump mechanism again;
the third switching operation is performed again when the pump mechanism keeps operating for tenth preset time; and
the actuator is shut off when the actuator keeps operating for eleventh preset time;
wherein the tenth preset time is longer than the eighth preset time, and the eleventh preset time is longer than the ninth preset time; or,
at a beginning of the cleaning motion, the control component starts the actuator first;
when the actuator keeps operating for twelfth preset time, a fifth switching operation is performed, the fifth switching operation comprising: shutting off the actuator and starting the pump mechanism;
when the pump mechanism keeps operating for thirteenth preset time, a sixth switching operation is performed, the sixth switching operation comprising: shutting off the pump mechanism and starting the actuator again;
when the actuator keeps operating for fourteenth preset time, the fifth switching operation is performed again; and
when the pump mechanism keeps operating for fifteenth preset time, the pump mechanism is shut off;
wherein the fourteenth preset time is longer than the twelfth preset time, and the fifteenth preset time is longer than the thirteenth preset time.

15. The device according to claim 14, wherein the eighth preset time ranges from 80 ms to 120 ms, and/or the ninth preset time ranges from 80 ms to 120 ms.

16. The device according to claim 14, wherein the tenth preset time ranges from 120 ms to 250 ms, and/or the eleventh preset time ranges from 600 ms to 1000 ms.

17. The device according to claim 14, wherein the twelfth preset time ranges from 80 ms to 120 ms, and/or the thirteenth preset time ranges from 80 ms to 120 ms.

18. The device according to claim 14, wherein the fourteenth preset time ranges from 600 ms to 1000 ms, and/or the fifteenth preset time ranges from 120 ms to 250 ms.

19. A control method for an oral cleaning device, the control method being applied to the oral cleaning device according to any one of claims 1 to 18, wherein the control method comprises:
controlling (S33) the actuator and the pump mechanism to operate, such that the cleaning accessory performs a periodic cleaning motion; wherein
during the cleaning motion, the control component keeps (S34) one of the actuator and the pump mechanism operating and shuts off the other one.

## Patentansprüche

1. Mundreinigungsvorrichtung, umfassend:
ein Reinigungszubehör (11), das ein Bewegungsreinigungselement (111) und ein Fluidreinigungselement (112) umfasst;
einen Haltekörper (12), der mit dem Reinigungszubehör verbunden ist, wobei der Haltekörper umfasst:
einen Aktuator (121), der so eingerichtet ist, dass er das Bewegungsreinigungselement antreibt, um eine Verlagerungsbewegung durchzuführen; und
einen Pumpmechanismus (122), der mit dem Fluidreinigungselement in Verbindung steht, wobei der Pumpmechanismus so eingerichtet ist, dass er ein fluides Medium über einen Verbindungsweg zu dem Fluidreinigungselement befördert, um einen Fluidstoß durchzuführen; und
eine Steuerkomponente (13), die so eingerichtet ist, dass sie den Betrieb des Aktuators und des Pumpmechanismus steuert, um es dem Reinigungszubehör zu ermöglichen, eine periodische Reinigungsbewegung durchzuführen;
wobei die Steuerkomponente während der Reinigungsbewegung einen des Aktuators und des Pumpmechanismus in Betrieb hält und den anderen abschaltet.

2. Vorrichtung nach Anspruch 1, wobei zu Beginn der Reinigungsbewegung die Steuerkomponente zuerst den Aktuator startet;
wenn der Aktuator eine erste voreingestellte Zeit lang in Betrieb bleibt, ein erster Schaltvorgang durchgeführt wird, wobei der erste Schaltvorgang umfasst: Abschalten des Aktuators und Starten des Pumpmechanismus; und
wenn der Pumpmechanismus eine zweite voreingestellte Zeit lang in Betrieb bleibt, der Pumpmechanismus abgeschaltet wird; oder
zu Beginn der Reinigungsbewegung die Steuerkomponente zuerst den Pumpmechanismus startet;
wenn der Pumpmechanismus eine dritte voreingestellte Zeit lang in Betrieb bleibt, ein zweiter Schaltvorgang durchgeführt wird, wobei der zweite Schaltvorgang umfasst: Abschalten des Pumpmechanismus und Starten des Aktuators; und
der Aktuator abgeschaltet wird, wenn der Aktuator eine vierte voreingestellte Zeit lang in Betrieb bleibt.

3. Vorrichtung nach Anspruch 2, wobei ein Verhältnis der zweiten voreingestellten Zeit zur Zykluszeit der Reinigungsbewegung im Bereich von 10 % bis 40 % liegt.

4. Vorrichtung nach Anspruch 2 oder 3, wobei die zweite voreingestellte Zeit oder die dritte voreingestellte Zeit im Bereich von 200 ms bis 280 ms liegt.

5. Vorrichtung nach Anspruch 2, wobei ein Verhältnis der dritten voreingestellten Zeit zur Zykluszeit der Reinigungsbewegung im Bereich von 10 % bis 40 % liegt.

6. Vorrichtung nach Anspruch 2, wobei die Steuerkomponente so ausgestaltet ist, dass sie Benutzereingaben empfängt oder historische Nutzungsdaten sammelt und die Zykluszeit der Reinigungsbewegung, die erste voreingestellte Zeit und/oder die zweite voreingestellte Zeit bestimmt.

7. Vorrichtung nach Anspruch 2, wobei die Steuerkomponente so ausgestaltet ist, dass sie Benutzereingaben empfängt oder historische Nutzungsdaten sammelt und die Zykluszeit der Reinigungsbewegung, die dritte voreingestellte Zeit und/oder die vierte voreingestellte Zeit bestimmt.

8. Vorrichtung nach Anspruch 1, wobei die Steuerkomponente einen des Aktuators und des Pumpmechanismus steuert oder den Aktuator und den Pumpmechanismus gleichzeitig so steuert, dass sie vor oder nach der periodischen Reinigungsbewegung betrieben werden.

9. Vorrichtung nach Anspruch 8, wobei die Steuerkomponente in Reaktion auf eine Benutzereingabe oder ein Sensorsignal einen Betriebsmodus des Aktuators bestimmt und den Aktuator so steuert, dass er gemäß dem Betriebsmodus betrieben wird.

10. Vorrichtung nach Anspruch 9, wobei der Betriebsmodus ein erster Modus ist und die Steuerkomponente so ausgestaltet ist, dass sie einen anfänglichen Betriebsparameter an den Aktuator ausgibt und den Aktuator so steuert, dass er startet;
immer wenn der Aktuator eine sechste voreingestellte Zeit lang in Betrieb ist, die Steuerkomponente einen Betriebsparameter eines aktuellen Zeitknotens bestimmt und den Aktuator so steuert, dass er gemäß dem Betriebsparameter des aktuellen Zeitknotens betrieben wird; und
wenn der Aktuator eine siebte voreingestellte Zeit lang in Betrieb bleibt, die Steuerkomponente den Aktuator so steuert, dass er gemäß einem voreingestellten Zielbetriebsparameter betrieben wird.

11. Vorrichtung nach Anspruch 10, wobei das Bestimmen des Betriebsparameters des aktuellen Zeitknotens umfasst:
Bestimmen des Betriebsparameters des aktuellen Zeitknotens gemäß einem Betriebsparameter eines vorherigen Zeitknotens und einer voreingestellten Variable; oder
Bestimmen des Betriebsparameters des aktuellen Zeitknotens gemäß einer voreingestellten Zuordnungstabelle oder einer Betriebsparameterfolge.

12. Vorrichtung nach Anspruch 10, wobei die Steuerkomponente die Variable und/oder den anfänglichen Betriebsparameter gemäß dem voreingestellten Zielbetriebsparameter und der Anzahl von Zeitintervallen bestimmt.

13. Vorrichtung nach Anspruch 1, wobei, wenn die Steuerkomponente den Aktuator und den Pumpmechanismus so steuert, dass sie derart betrieben werden, dass das Reinigungszubehör eine Vielzahl von periodischen Reinigungsbewegungen durchführt, die Betriebszeit des Aktuators und/oder die Betriebszeit des Pumpmechanismus bei der Vielzahl von periodischen Reinigungsbewegungen unterschiedlich sind.

14. Vorrichtung nach Anspruch 1, wobei zu Beginn der Reinigungsbewegung die Steuerkomponente zuerst den Pumpmechanismus startet;
wenn der Pumpmechanismus eine achte voreingestellte Zeit lang in Betrieb bleibt, ein dritter Schaltvorgang durchgeführt wird, wobei der dritte Schaltvorgang umfasst: Abschalten des Pumpmechanismus und Starten des Aktuators;
wenn der Aktuator eine neunte voreingestellte Zeit lang in Betrieb bleibt, ein vierter Schaltvorgang durchgeführt wird, wobei der vierte Schaltvorgang umfasst: Abschalten des Aktuators und erneutes Starten des Pumpmechanismus;
der dritte Schaltvorgang erneut durchgeführt wird, wenn der Pumpmechanismus eine zehnte voreingestellte Zeit lang in Betrieb bleibt; und
der Aktuator abgeschaltet wird, wenn der Aktuator eine elfte voreingestellte Zeit lang in Betrieb bleibt;
wobei die zehnte voreingestellte Zeit länger ist als die achte voreingestellte Zeit und die elfte voreingestellte Zeit länger ist als die neunte voreingestellte Zeit; oder
zu Beginn der Reinigungsbewegung die Steuerkomponente zuerst den Aktuator startet;
wenn der Aktuator eine zwölfte voreingestellte Zeit lang in Betrieb bleibt, ein fünfter Schaltvorgang durchgeführt wird, wobei der fünfte Schaltvorgang umfasst: Abschalten des Aktuators und Starten des Pumpmechanismus;
wenn der Pumpmechanismus eine dreizehnte voreingestellte Zeit lang in Betrieb bleibt, ein sechster Schaltvorgang durchgeführt wird, wobei der sechste Schaltvorgang umfasst: Abschalten des Pumpmechanismus und erneutes Starten des Aktuators;
wenn der Aktuator eine vierzehnte voreingestellte Zeit lang in Betrieb bleibt, der fünfte Schaltvorgang erneut durchgeführt wird; und
wenn der Pumpmechanismus eine fünfzehnte voreingestellte Zeit lang in Betrieb bleibt, der Pumpmechanismus abgeschaltet wird;
wobei die vierzehnte voreingestellte Zeit länger ist als die zwölfte voreingestellte Zeit und die fünfzehnte voreingestellte Zeit länger ist als die dreizehnte voreingestellte Zeit.

15. Vorrichtung nach Anspruch 14, wobei die achte voreingestellte Zeit im Bereich von 80 ms bis 120 ms liegt und/oder die neunte voreingestellte Zeit im Bereich von 80 ms bis 120 ms liegt.

16. Vorrichtung nach Anspruch 14, wobei die zehnte voreingestellte Zeit in Bereich von 120 ms bis 250 ms liegt und/oder die elfte voreingestellte Zeit im Bereich von 600 ms bis 1000 ms liegt.

17. Vorrichtung nach Anspruch 14, wobei die zwölfte voreingestellte Zeit im Bereich von 80 ms bis 120 ms liegt und/oder die dreizehnte voreingestellte Zeit im Bereich von 80 ms bis 120 ms liegt.

18. Vorrichtung nach Anspruch 14, wobei die vierzehnte voreingestellte Zeit im Bereich von 600 ms bis 1000 ms liegt und/oder die fünfzehnte voreingestellte Zeit im Bereich von 120 ms bis 250 ms liegt.

19. Steuerverfahren für eine Mundreinigungsvorrichtung, wobei das Steuerverfahren auf die Mundreinigungsvorrichtung nach einem der Ansprüche 1 bis 18 angewendet wird, wobei das Steuerverfahren umfasst:
Steuern (S33) des Aktuators und des Pumpmechanismus so, dass diese derart betrieben werden, dass das Reinigungszubehör eine periodische Reinigungsbewegung durchführt; wobei
die Steuerkomponente während der Reinigungsbewegung einen des Aktuators und des Pumpmechanismus in Betrieb hält (S34) und den anderen abschaltet.

## Revendications

1. Dispositif de nettoyage buccal, comprenant :
un accessoire de nettoyage (11) comportant un élément de nettoyage en mouvement (111) et un élément de nettoyage par fluide (112) ;
un corps de maintien (12) relié à l'accessoire de nettoyage, le corps de maintien comportant :
un actionneur (121) conçu pour entraîner l'élément de nettoyage en mouvement pour réaliser un mouvement de déplacement ; et
un mécanisme de pompe (122) communiquant avec l'élément de nettoyage par fluide, le mécanisme de pompe étant conçu pour transporter un milieu fluide vers l'élément de nettoyage par fluide sur un trajet de communication pour réaliser un choc de fluide ; et
un composant de commande (13) conçu pour commander le fonctionnement de l'actionneur et du mécanisme de pompe pour permettre à l'accessoire de nettoyage de réaliser un mouvement de nettoyage périodique ;
dans lequel, pendant le mouvement de nettoyage, le composant de commande maintient l'un de l'actionneur et du mécanisme de pompe en fonctionnement et arrête l'autre.

2. Dispositif selon la revendication 1, dans lequel, au début du mouvement de nettoyage, le composant de commande démarre d'abord l'actionneur ;
lorsque l'actionneur continue à fonctionner pendant une première durée prédéfinie, une première opération de commutation est réalisée, la première opération de commutation comportant : l'arrêt de l'actionneur et le démarrage du mécanisme de pompe ; et
lorsque le mécanisme de pompe continue à fonctionner pendant une deuxième durée prédéfinie, le mécanisme de pompe est arrêté ; ou,
au début du mouvement de nettoyage, le composant de commande démarre d'abord le mécanisme de pompe ;
lorsque le mécanisme de pompe continue à fonctionner pendant une troisième durée prédéfinie, une deuxième opération de commutation est réalisée, la deuxième opération de commutation comportant : l'arrêt du mécanisme de pompe et le démarrage de l'actionneur ; et
l'actionneur est coupé lorsque l'actionneur continue à fonctionner pendant la quatrième durée prédéfinie.

3. Dispositif selon la revendication 2, dans lequel un rapport de la deuxième durée prédéfinie sur la durée de cycle du mouvement de nettoyage va de 10 % à 40 %.

4. Dispositif selon la revendication 2 ou 3, dans lequel la deuxième durée prédéfinie ou la troisième durée prédéfinie va de 200 ms à 280 ms.

5. Dispositif selon la revendication 2, dans lequel un rapport de la troisième durée prédéfinie sur la durée de cycle du mouvement de nettoyage va de 10 % à 40 %.

6. Dispositif selon la revendication 2, dans lequel le composant de commande est conçu pour recevoir une entrée utilisateur ou collecter des données d'utilisation historiques, et déterminer la durée de cycle du mouvement de nettoyage, la première durée prédéfinie et/ou la deuxième durée prédéfinie.

7. Dispositif selon la revendication 2, dans lequel le composant de commande est conçu pour recevoir une entrée utilisateur ou collecter des données d'utilisation historiques, et déterminer la durée de cycle du mouvement de nettoyage, la troisième durée prédéfinie et/ou la quatrième durée prédéfinie.

8. Dispositif selon la revendication 1, dans lequel le composant de commande commande à l'un parmi l'actionneur et le mécanisme de pompe ou commande simultanément à l'actionneur et au mécanisme de pompe de fonctionner avant ou après le mouvement de nettoyage périodique.

9. Dispositif selon la revendication 8, dans lequel le composant de commande détermine un mode de fonctionnement de l'actionneur en réponse à une entrée utilisateur ou à un signal de détection, et commande à l'actionneur de fonctionner selon le mode de fonctionnement.

10. Dispositif selon la revendication 9, dans lequel le mode de fonctionnement est un premier mode, et le composant de commande est conçu pour délivrer un paramètre de fonctionnement initial à l'actionneur et commander à l'actionneur de démarrer ;
à chaque fois que l'actionneur fonctionne pendant une sixième durée prédéfinie, le composant de commande détermine un paramètre de fonctionnement d'un nœud temporel actuel, et commande à l'actionneur de fonctionner selon le paramètre de fonctionnement du nœud temporel actuel ; et
lorsque l'actionneur continue à fonctionner pendant une septième durée prédéfinie, le composant de commande commande à l'actionneur de fonctionner selon un paramètre de fonctionnement cible prédéfini.

11. Dispositif selon la revendication 10, dans lequel la détermination du paramètre de fonctionnement du nœud temporel actuel comporte :
la détermination du paramètre de fonctionnement du nœud temporel actuel selon un paramètre de fonctionnement d'un nœud temporel précédent et une variable prédéfinie ; ou
la détermination du paramètre de fonctionnement du nœud temporel actuel selon une table de correspondances prédéfinie ou une séquence de paramètres de fonctionnement.

12. Dispositif selon la revendication 10, dans lequel le composant de commande détermine le paramètre de fonctionnement variable et/ou initial selon le paramètre de fonctionnement cible prédéfini et le nombre d'intervalles de temps.

13. Dispositif selon la revendication 1, dans lequel lorsque le composant de commande commande à l'actionneur et au mécanisme de pompe de fonctionner de sorte que l'accessoire de nettoyage réalise une pluralité de mouvements de nettoyage périodiques, la durée de fonctionnement de l'actionneur et/ou la durée de fonctionnement du mécanisme de pompe sont différentes dans la pluralité de mouvements de nettoyage périodiques.

14. Dispositif selon la revendication 1, dans lequel, au début du mouvement de nettoyage, le composant de commande démarre d'abord le mécanisme de pompe ;
lorsque le mécanisme de pompe continue à fonctionner pendant une huitième durée prédéfinie, une troisième opération de commutation est réalisée, la troisième opération de commutation comportant : l'arrêt du mécanisme de pompe et le démarrage de l'actionneur ;
lorsque l'actionneur continue à fonctionner pendant une neuvième durée prédéfinie, une quatrième opération de commutation est réalisée, la quatrième opération de commutation comportant : l'arrêt de l'actionneur et le redémarrage du mécanisme de pompe ;
la troisième opération de commutation est à nouveau réalisée lorsque le mécanisme de pompe continue à fonctionner pendant une dixième durée prédéfinie ; et
l'actionneur est arrêté lorsque l'actionneur continue à fonctionner pendant la onzième durée prédéfinie ;
dans lequel la dixième durée prédéfinie est plus longue que la huitième durée prédéfinie, et la onzième durée prédéfinie est plus longue que la neuvième durée prédéfinie ; ou,
au début du mouvement de nettoyage, le composant de commande démarre d'abord l'actionneur ;
lorsque l'actionneur continue à fonctionner pendant une douzième durée prédéfinie, une cinquième opération de commutation est réalisée, la cinquième opération de commutation comportant : l'arrêt de l'actionneur et le démarrage du mécanisme de pompe ;
lorsque le mécanisme de pompe continue à fonctionner pendant une treizième durée prédéfinie, une sixième opération de commutation est réalisée, la sixième opération de commutation comportant : l'arrêt du mécanisme de pompe et le redémarrage de l'actionneur ;
lorsque l'actionneur continue à fonctionner pendant une quatorzième durée prédéfinie, la cinquième opération de commutation est à nouveau réalisée ; et
lorsque le mécanisme de pompe continue à fonctionner pendant une quinzième durée prédéfinie, le mécanisme de pompe est arrêté ;
dans lequel la quatorzième durée prédéfinie est plus longue que la douzième durée prédéfinie, et la quinzième durée prédéfinie est plus longue que la treizième durée prédéfinie.

15. Dispositif selon la revendication 14, dans lequel la huitième durée prédéfinie va de 80 ms à 120 ms, et/ou la neuvième durée prédéfinie va de 80 ms à 120 ms.

16. Dispositif selon la revendication 14, dans lequel la dixième durée prédéfinie va de 120 ms à 250 ms, et/ou la onzième durée prédéfinie va de 600 ms à 1 000 ms.

17. Dispositif selon la revendication 14, dans lequel la douzième durée prédéfinie va de 80 ms à 120 ms, et/ou la treizième durée prédéfinie va de 80 ms à 120 ms.

18. Dispositif selon la revendication 14, dans lequel la quatorzième durée prédéfinie va de 600 ms à 1 000 ms, et/ou la quinzième durée prédéfinie va de 120 ms à 250 ms.

19. Procédé de commande d'un dispositif de nettoyage buccal, le procédé de commande étant appliqué au dispositif de nettoyage buccal selon l'une quelconque des revendications 1 à 18, dans lequel le procédé de commande comporte :
la commande (S33) à l'actionneur et au mécanisme de pompe de fonctionner, de sorte que l'accessoire de nettoyage réalise un mouvement de nettoyage périodique ; dans lequel
pendant le mouvement de nettoyage, le composant de commande maintient (S34) l'un de l'actionneur et du mécanisme de pompe en fonctionnement et arrête l'autre.
